# EUROPÄISCHE PATENTSCHRIFT

(11) **EP 2 394 847 B1**
(45) Veröffentlichungstag und Bekanntmachung des Hinweises auf die Patenterteilung: **21.05.2014**
(21) Anmeldenummer: 11004376.7
(22) Anmeldetag: 27.05.2011
(51) Int. Cl.: B60N 3/10

(54) **Klemmvorrichtung**
Clamping device
Dispositif de serrage

(30) Priorität: 08.06.2010 DE 202010007632 U
(43) Veröffentlichungstag der Anmeldung: 14.12.2011
(73) Patentinhaber: Minda KTSN Plastic Solutions Gmbh & Co.KG, 01796 Pirna (DE)
(72) Erfinder: Kärgel, Ralf, 03048 Cottbus (DE); Meissner, Mario, 01324 Dresden (DE)
(74) Vertreter: Stornebel, Kai

(56) Entgegenhaltungen:
- EP-A1- 1 316 472
- EP-A1- 1 671 841
- EP-A2- 2 075 157
- DE-A1-102005 019 035
- DE-U1- 20 111 577
- DE-U1-202005 010 253

## Beschreibung

Die Erfindung betrifft eine Klemmvorrichtung zum Halten von Gegenständen in einer Aufnahme, die eine Grundfläche und eine der Grundfläche gegenüberliegende Einführöffnung aufweist, mit einem schwenkbar gelagerten Ausgleichselement, das in Richtung auf den zu haltenden Gegenstand vorgespannt ist und ohne eingeführten Gegenstand in die Einführöffnung hineinragt. Eine solche Klemmvorrichtung dient insbesondere zum Halten von Getränkebehältern wie Dosen, Tassen oder anderen Trinkbehältern und wird auch als Cupholder bezeichnet.

Cupholder weisen eine Einführöffnung und eine in Einführrichtung dahinter angeordnete Grundfläche auf, auf der der Gegenstand abgestellt werden kann. Diese Grundfläche kann geschlossen ausgebildet sein, alternative Begrenzungen und Auflagereinrichtungen sind möglich. Zwischen der Einführöffnung und der Grundfläche oder dem Auflager kann eine umlaufende Wand angeordnet sein, es besteht auch die Möglichkeit, dass keine Umfassung des Aufnahmeraumes zwischen der Einführöffnung und dem Auflager vorhanden ist.

Die EP 1,671,841 A1 beschreibt eine Klemmvorrichtung zum Halten von Gegenständen, insbesondere Gefäßen für Getränke, mit einer Aufnahme, die einen von einer Grundfläche in Richtung auf den zu klemmenden Gegenstand hervorstehenden Deformationsabschnitt aus einem elastischen Kunststoff aufweist, der einen Kontaktbereich mit dem einzuklemmenden Gegenstand aufweist. Über diesen Kontaktbereich ist es möglich, den zu klemmenden Gegenstand mit einer Haltekraft zu beaufschlagen, so dass der in der Aufnahme eingestellte Gegenstand sicher gehalten wird. Über den Kontaktbereich werden Größenunterschiede der einzuführenden Gegenstände ausgeglichen.

Die DE 20 2005 010 253 U1 betrifft einen Halter für Getränkebehälter mit einem Haltering für den Getränkebehälter, bestehend aus einem Ringkörper aus einem harten Werkstoff, von dem nach radial innen zur Ringkörpermitte zielend gerichtete, lamellenähnliche Haltefinger aus einem weichen, elastischen Werkstoff abragen. An der Oberseite der Haltefinger sind Gleitstücke vorgesehen.

Die EP 1 316 472 A1 weist einen Halter für einen Getränkebehälter mit einer Grundplatte und einem Grundteil mit zwei starren Armen auf, die einen kreisförmigen Freiraum teilweise umschließen. Seitlich einer Einstellöffnung ist eine Ausnehmung für zwei Haltearme vorgesehen. Die Haltearme sind schwenkbar an einer Traverse gelagert, die wiederum schwenkbar an dem Grundteil gelagert ist.

Die DE 201 11 577 U1 betrifft eine Halterungsvorrichtung für Behältnisse in Kraftfahrzeugen mit einem Halteteil und einem Bodenteil. An dem Halteteil sind zwei Klemmbügel vorgesehen, die an einem Aufrichtelement drehgelenkig angeordnet sind. Das Aufrichtelement ist schwenkbar an einem Gehäuse gelagert.

Die EP 2 075 157 A2 betrifft einen Halter für einen Getränkebehälter mit einer Behälteraufnahme und zwei in die Behälteraufnahme ein und hinaus um je ene Schwenkachse schwenkbaren Ausgleichselementen, die an einem weiteren Ausgleichselement gelagert sind. Das weitere Ausgleichselement ist um eine senkrecht zu den Schwenkachsen gelagerte Kippachse gelagert.

Die DE 10 2005 019 035 A1 betrifft einen Halter für Getränkebehälter mit zwei Bügelelementen, die um jeweils eine Achse schwenkbar gelagert sind und zeigt die Merkmale des Oberbegriffs des Anspruchs 1. Die Bügelelemente sind an einem Deckel befestigt. Der Deckel ist schwenkbar an einem Gehäuse gelagert.

Aufgabe der vorliegenden Erfindung ist es, eine Haltevorrichtung bereitzustellen, mit der eine maximale Klemmhöhe eingehalten und ein Verkeilen taillierter Gegenstände in der Klemmvorrichtung vermieden wird.

Erfindungsgemäß wird diese Aufgabe durch eine Klemmvorrichtung mit den Merkmalen des Hauptanspruches gelöst. Vorteilhafte Ausgestaltungen und Weiterbildungen der Erfindung sind in den Unteransprüchen, der Beschreibung und den Figuren aufgeführt.

Die erfindungsgemäße Klemmvorrichtung zum Halten von Gegenständen in einer Aufnahme, die eine Grundfläche und eine der Grundfläche gegenüberliegende Einführöffnung aufweist, mit einem schwenkbar gelagerten Ausgleichselement, das in Richtung auf den zu haltenden Gegenstand vorgespannt und ohne eingeführten Gegenstand in die Einführöffnung hineinragt, sieht vor, dass das Ausgleichselement um zwei winklig zueinander orientierte Achsen schwenkbar gelagert ist, wobei das Ausgleichselement eine trichterförmige Ausnehmung als Aufnahme für einen Lagerzapfen aufweist. Durch die beiden winklig zueinander orientierten Achsen ist es möglich, dass das Ausgleichselement beim Einführen eines Gegenstandes seitlich aus der Einführöffnung herausschwenken und gleichzeitig in Einführrichtung nach unten wegschwenken kann, um dann wieder möglichst weit nach oben zurückzuschwenken. Dadurch wird erreicht, dass eine maximale Klemmhöhe, also diejenige Höhe, die zwischen der Anlagefläche des Ausgleichselementes und der Grundfläche der Aufnahme vorhanden ist, erreicht wird. Je größer der Abstand zwischen der Aufstellfläche und der seitlichen Gefäßhalterung ist, desto sicherer wird der eingeführte Gegenstand gehalten, so dass eine stabile Fixierung des Gegenstandes in der Aufnahme und der Klemmvorrichtung gewährleistet ist. Darüber hinaus wird ein Verkeilen von taillierten Gefäßen ausgeschlossen. Das Ausgleichselement weist eine trichterförmige Ausnehmung als Aufnahme für einen Lagerzapfen auf, wodurch es möglich ist, dass das Ausgleichselement um den Lagerzapfen rotieren und gleichzeitig verschwenken kann, so dass mehrere rotatorische Freiheitsgrade durch diese Lagerung gewährleistet sind. Die Kippbewegung wird nur durch den Öffnungswinkel des Trichters limitiert.

Bevorzugt ist das Ausgleichselement um beide Achsen federbelastet gelagert, so dass eine definierte Rückstellkraft auf das Ausgleichselement ausgeübt wird und das Ausgleichselement die Tendenz hat, in die Ausgangsposition zurückzukehren. Die Ausgangsposition ist diejenige Position, die das Ausgleichselement einnimmt, wenn kein Gegenstand eingeführt ist. Durch die Federbelastung ist es möglich, über das Ausgleichselement den Gegenstand sowohl gegen die Begrenzung der Einführöffnung zu drücken als auch ein Zurückschwenken des Ausgleichselementes entgegen der Einführrichtung zu bewirken.

Es kann vorgesehen sein, dass eine erste Achse vertikal oder als Alternative horizontal orientiert ist, während eine zweite Achse schräg dazu geneigt angeordnet ist. Grundsätzlich ist es auch möglich, die erste Achse vertikal oder horizontal zu orientieren, während die zweite Achse senkrecht dazu orientiert ist, so dass durch die Überlagerung der Schwenkbewegungen gewährleistet wird, dass das Ausgleichselement sowohl aus der Einführöffnung herausschwenkt als auch in Einführrichtung nach unten schwenkbar gelagert ist.

In einer Variante der Erfindung ist es vorgesehen, dass die Achsen einander nicht schneiden, also dass die Lagerung aufgelöst ist. Dadurch kann eine Anpassung der Lagersituation des Ausgleichselementes erfolgen. Durch die Auflösung der Lagersituation durch die einander nicht schneidenden Achsen kann eine Anpassung an die Einbausituation des Ausgleichselementes oder der gesamten Klemmvorrichtung leichter vorgenommen werden.

Eine alternative Lagerungsmöglichkeit besteht darin, dass das Ausgleichselement an einem Kardangelenk gelagert ist, wodurch sich eine kompakte und zuverlässige Lagerung des Ausgleichselementes verwirklichen lässt. Die Achsen der kardanischen Lagerung können sich schneiden. Neben einer rechtwinkligen Orientierung der Achsen zueinander können die beiden Achsen sich auch in einem spitzen Winkel schneiden, so dass neben einer Verschwenkung nach außen auch eine Verschwenkung nach unten realisiert werden kann.

Das Ausgleichselement kann in einer Kulissenführung gelagert sein, um sicherzustellen, dass beim Einstellen von Gegenständen das Ausgleichselement nicht nur in die Einführrichtung heruntergedrückt wird, sondern zwangsläufig gleichzeitig auch zur Seite verschwenkt wird.

Das Ausgleichselement kann an einem Rahmen gelagert sein, in dem die Einführöffnung ausgebildet ist. Dadurch ist es möglich, eine kompakte und modulare Ausgestaltung der Klemmvorrichtung auszubilden. Der Rahmen kann verschieblich oder verschwenkbar gelagert sein, ebenfalls ist es möglich, dass die Grundfläche an dem Rahmen gelagert ist und beim Ausschwenken in die Aufnahmeposition herausgefahren oder herausgeschwenkt wird.

Das Ausgleichselement kann unterhalb der Einführöffnung gelagert sein, also in Einführrichtung des Gegenstandes unterhalb der Einführöffnung, vorzugsweise an einem Rahmen, so dass der Rahmen oder die Begrenzung der Einführöffnung einen Anschlag für das Ausgleichselement bildet, so dass die Ausgangsstellung stets erreicht wird.

Nachfolgend werden Ausführungsbeispiele der Erfindung anhand der Figuren näher erläutert. Es zeigen:
- Figur 1: verschiedene Phasen des Einführens und Herausnehmens eines Gegenstandes in eine Klemmvorrichtung in verschiedenen Ansichten;
- Figur 2: eine schematische Darstellung der Klemmvorrichtung mit einem vertikalen Lagerzapfen;
- Figur 3: eine Variante der Figur 2 mit einem im Wesentlichen horizontalen Lagerzapfen;
- Figur 4: eine Variante der Erfindung mit einer kardanischen Lagerung;
- Figur 5 -: zwei Darstellungen eines Klemmelementes mit kardanischer Lagerung; sowie
- Figur 6 -: Detailansichten der Figur 5 in unterschiedlichen Stellungen.

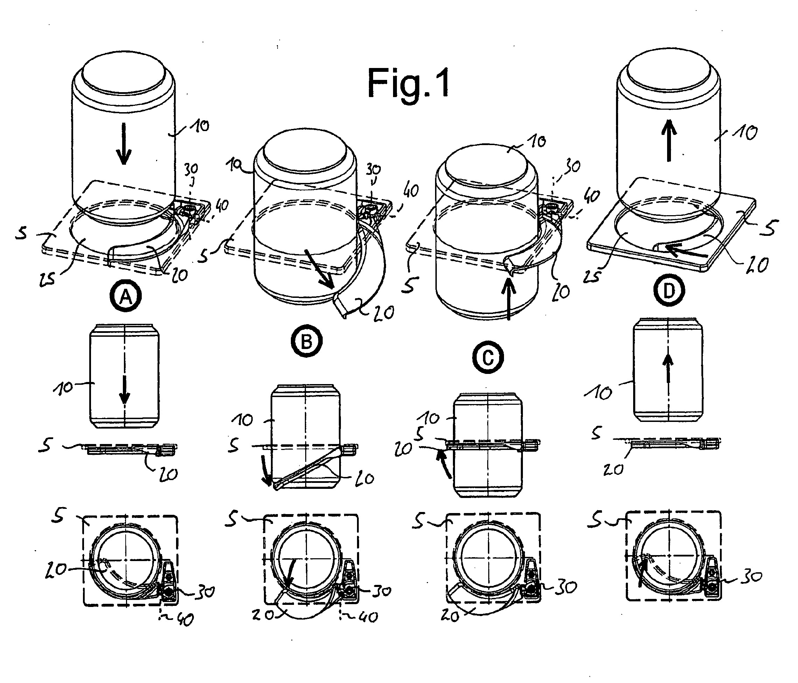

In der Figur 1 ist in den Darstellungen A bis D der Verlauf des Einführens und Herausnehmens eines Gegenstandes 10 in eine Einführöffnung 25 einer Klemmvorrichtung dargestellt. Der Gegenstand 10, beispielsweise eine Getränkedose, ein Becher oder dergleichen, wird in eine Einführöffnung 25 eingeführt, die in einem Rahmen 5 ausgebildet ist. Dieser Rahmen 5 umgibt die Einführöffnung 25 vollständig. In der mittleren Ansicht der Darstellung A, also in der Seitenansicht, ist zu erkennen, dass ein an dem Rahmen 5 gelagertes Ausgleichselement 20 in Einführrichtung, die durch den Pfeil dargestellt ist, unterhalb des Rahmens gelagert ist. Das Ausgleichselement 20 ragt, wie in der unteren Ansicht in Draufsicht gezeigt ist, in die Einführöffnung 25 hinein, wenn der Gegenstand 10 noch nicht eingeführt ist. Das Ausgleichselement 20 ist um zwei Achsen 30, 40 verschwenkbar gelagert. Diese Achsen 30, 40 sind in der oberen, perspektivischen Ansicht zu erkennen. Das Ausgleichselement 20 ist um beide Achsen 30, 40, die senkrecht zueinander orientiert sind, über je ein Federelement vorgespannt, so dass es bei einem nicht eingeführten Gegenstand 10 in die in der Darstellung A gezeigte Ausgangsposition zurückkehrt. Der Anschlag für das Ausgleichselement 20 um die horizontale Achse 40 wird durch den Rahmen 5 gebildet, der zweite Anschlag kann an dem Rahmen 5 oder in der Lagersituation der Achsen 30, 40 ausgebildet sein.

Wird der Gegenstand 10 in die Einführöffnung 25 eingeführt, schwenkt das Ausgleichselement 20 sowohl nach unten als auch zur Seite aus der Einführöffnung 25 heraus, was in der unteren Ansicht der Darstellung B gezeigt ist. Das Ausgleichselement 20 bewegt sich also während des Einführens des Gegenstandes 10 in die Einführöffnung um beide Achsen 30, 40.

Ist der Gegenstand 10 vollständig in die Aufnahme, die sich zwischen der Einführöffnung 20 und einer nicht dargestellten Grundfläche eines Auflagers befindet, eingeführt, schwenkt das Ausgleichselement 20 um die horizontale Achse 40 herum zurück in die Ebene des Rahmens 5. Weiterhin drückt das Ausgleichselement 20 aufgrund der Federvorspannung und der Auslenkung um die vertikale Achse 30 seitlich auf den Gegenstand 10 und hält diesen fest in der Einführöffnung 25, indem das Ausgleichselement 20 den Gegenstand 10 an den Rahmen 5 drückt. Die Rückschwenkbewegung des Ausgleichselementes 20 ist in der mittleren Ansicht der Darstellung C gezeigt, die um die Achse 30 herausgeschwenkte Position des Ausgleichselementes 20 ist in Draufsicht in der unteren Ansicht gezeigt.

Wird der Gegenstand 10 der Klemmvorrichtung entnommen, was in der Darstellung D dargestellt ist, schwenkt das Ausgleichselement 20 um die vertikale Achse 30 zurück in die Ausgangsposition.

Das Ausgleichselement 20 ist vorrangig um die vertikale Achse 30 schwenkbar gelagert und zusätzlich dazu um die zweite, schräg zu der ersten Achse 30 stehende Achse 40. Das Verschwenken um die vertikale Achse 30 bewirkt die Klemmung des Gefäßes 10 innerhalb der Einführöffnung 25 und dient der Anpassung der Anlage des Ausgleichselementes 20 an den Gegenstand. Durch die schwenkbare Lagerung um die zweite Achse 40 kann das Ausgleichselement 20 beim Einstellen des Gefäßes 10 oder des Gegenstandes seitlich und nach unten wegschwenken, um dann wieder federbelastet nach oben in die waagerechte Schwenkebene zurückzuspringen. Dadurch wird immer die maximale Klemmhöhe eingehalten und ein Verkeilen von taillierten Gegenständen ist ausgeschlossen. Sobald sich das Ausgleichselement 20 ausreichend weit neben dem eingeführten Gegenstand 10 befindet, gleitet es durch die rückstellende Wirkung der um die zweite Achse 40 wirkenden Feder an der Außenwand des Gegenstandes 10 nach oben in die um die vertikale Achse 30 ausgelenkte Ausgangsstellung zurück. In dieser Stellung, also in einer im Wesentlichen horizontal orientierten Stellung des Ausgleichselementes 20, wird eine optimale Klemmwirkung des Ausgleichselementes 20 erreicht, so dass neben einer Vermeidung eines Verkeilens taillierter Gegenstände auch eine optimale Klemmwirkung erreicht wird.

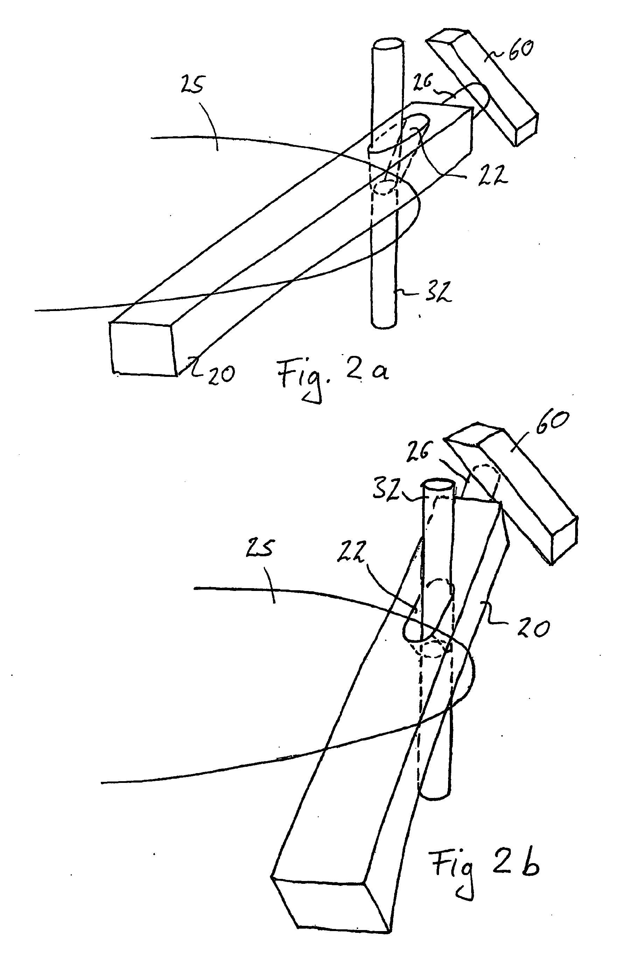

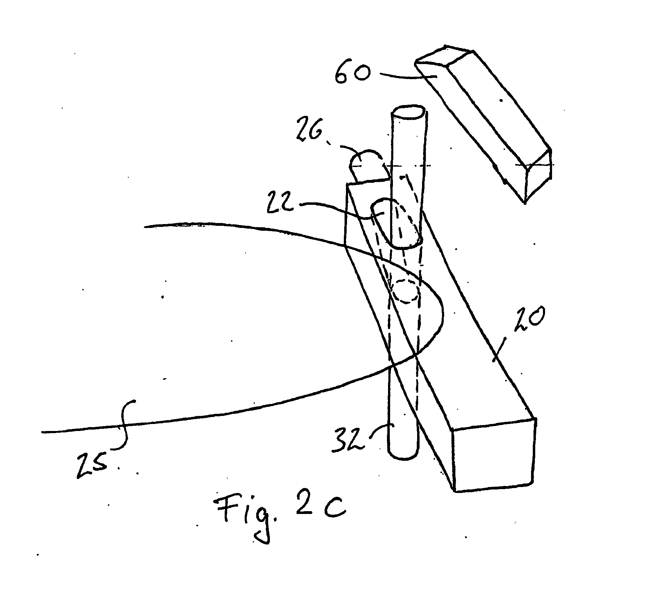

In der Figur 2 sind in den Darstellungen A bis C verschiedene Zustände der Klemmvorrichtung gezeigt. In der Figur 2a ist die Ausgangsposition gezeigt. Das Ausgleichselement 20 ist schematisch als Balken dargestellt, es kann aber auch gebogen ausgebildet sein, wie es in der Figur 1 dargestellt ist. Alternative Ausgestaltungsformen des Ausgleichselementes 20 selbst sind möglich. Die Einführöffnung 25 ist schematisch angedeutet. Das Ausgleichselement 20 ist um einen Lagerzapfen 32 gelagert, dessen Längserstreckung gleichzeitig auch die erste Schwenkachse ausbildet. Innerhalb des Ausgleichselementes 20 ist eine trichterförmige Ausnehmung 22 ausgebildet, die als Langloch ausgeführt ist und eine Breite aufweist, die im Wesentlichen dem Durchmesser des Lagerzapfens 32 entspricht. Durch diese Ausgestaltung des Ausgleichselementes 20 ist es möglich, dass das Ausgleichselement 20 einerseits eine Drehbewegung um die Achse entlang der Längserstreckung des Lagerzapfens 32 und andererseits eine Kippbewegung entlang der Längserstreckung der trichterförmigen, schmalen Ausnehmung 22 ausführt. Dadurch sind zwei rotatorische Freiheitsgrade der Lagerung des Ausgleichselementes 20 gegeben. Der Schwenkwinkel um die Schwenkachse entlang der Längserstreckung des Lagerzapfens 32 wird durch eine Kulissenführung 60 begrenzt, der Schwenkwinkel um die schräg dazu angeordnete Schwenkachse durch die Grenzen der Ausnehmung 22.

In der Figur 2b ist der Zustand des beginnenden Einführens eines Gegenstandes gezeigt. Das Ausgleichselement 20 ist zunächst entlang der Ausnehmung 22 nach unten verschwenkt. Aufgrund der Verschwenkung nach unten der gleichzeitigen Lagerung eines Leitzapfens 26 an einer Kulissenführung 60 folgt eine zwangsweise geführte Verschwenkbewegung des Ausgleichselements 20 um die Achse der Längserstreckung des Lagerzapfens 32 aus der Einführöffnung 25 heraus. Die Kulissenführung 60 ist vorgesehen, damit beim Einstellen von Gegenständen 10 das Ausgleichselement 20 nicht nur heruntergedrückt wird, sondern zwangsläufig auch aus der Einführöffnung 25 herausgeschwenkt wird. Nach dem Herausschwenken und Herunterschwenken des Ausgleichselementes 20 kehrt dies aufgrund einer Federvorspannung über ein Federelement, das nicht dargestellt ist, in die horizontale Position zurück, die in der Figur 2c gezeigt ist. Das Ausgleichselement 20 ist weiterhin aus der Einführöffnung 25 herausgeschwenkt. Eine Zwangskopplung über die Kulissenführung 60 ist aufgrund der Rückschwenkbewegung um die zweite Schwenkachse nicht mehr notwendig. Wird der nicht dargestellte Gegenstand aus der Einführöffnung 25 entfernt, schwenkt das Ausgleichselement 20 um die Schwenkachse parallel zur Längserstreckung des Lagerzapfens 32 zurück und nimmt die Ausgangsstellung gemäß Figur 2a wieder ein.

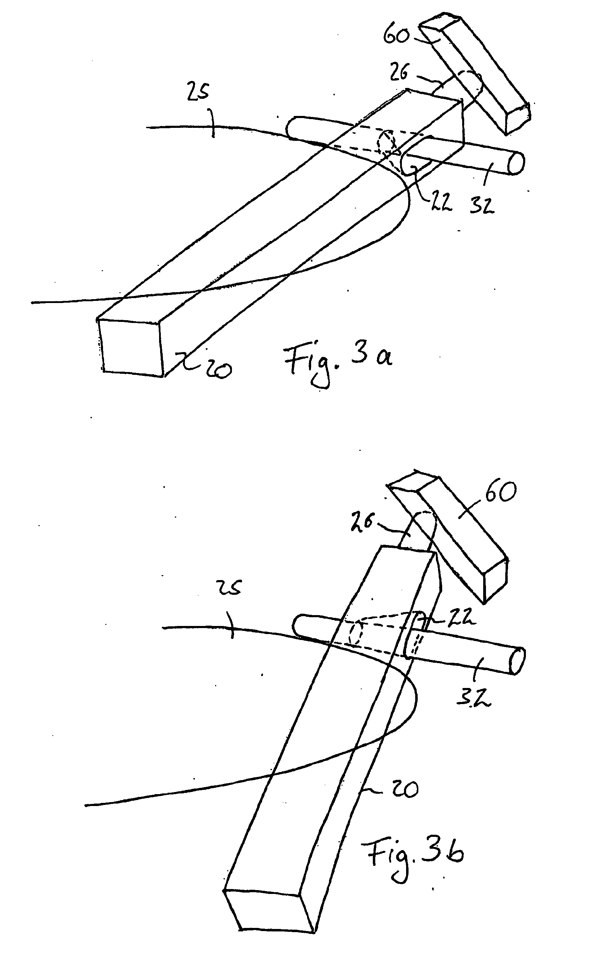

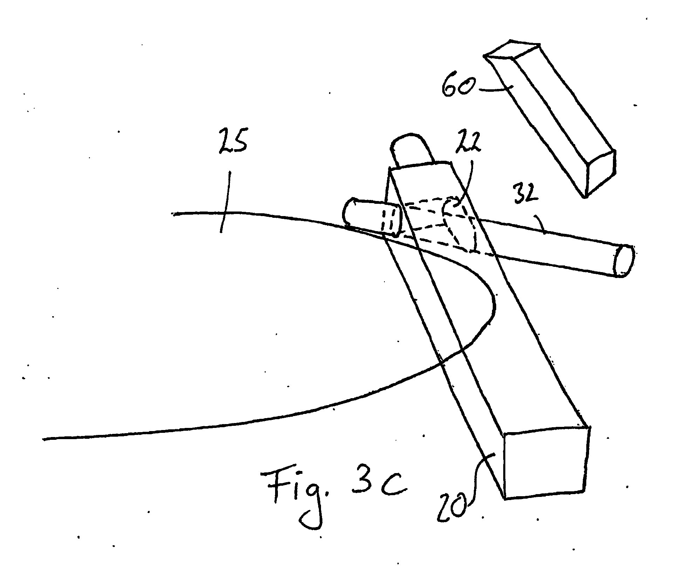

Eine Variante der Erfindung ist in den Figuren 3a bis 3c dargestellt, in denen die Abläufe gemäß Figur 2 entsprechend dargestellt sind. Statt einer im Wesentlichen vertikalen Orientierung der ersten Schwenkachse parallel zur Längserstreckung des Lagerzapfens 32 ist in der Figur 3 eine im wesentlichen horizontale Anordnung des Lagerzapfens 32 und damit auch der ersten Schwenkachse dargestellt. Der Lagerzapfen 32 liegt somit in der Ebene des Rahmens 5 oder parallel dazu. Die trichterförmige Ausnehmung 22 entspricht der trichterförmigen Ausnehmung 22 in den Figuren 2a bis 2c. Der maximale Verschwenkwinkel aus der Einführöffnung 25 heraus wird durch den Öffnungswinkel der trichterförmigen Ausnehmung 22 festgelegt, der Zapfen 26 gleitet auf einer Kulissenführung 60 zwangsweise beim Einführen und Herunterschwenken des Ausgleichselementes in Einführrichtung entlang und bewirkt eine Herausschwenkbewegung des Ausgleichselementes 20 aus der Einführöffnung. Die klemmende Endposition des Ausgleichselementes 20 ist in der Figur 3c gezeigt, in der das Ausgleichselement 20 um die Schwenkachse parallel zur Längserstreckung des Lagerzapfens 32 zurück in die im Wesentlichen horizontale Orientierung zurückgeschwenkt wird und über ein nicht dargestelltes Federelement in Richtung auf den nicht dargestellten Gegenstand belastet wird. Nach dem Entnehmen des Gegenstandes nimmt das Ausgleichselement 20 die Position gemäß Figur 3a an.

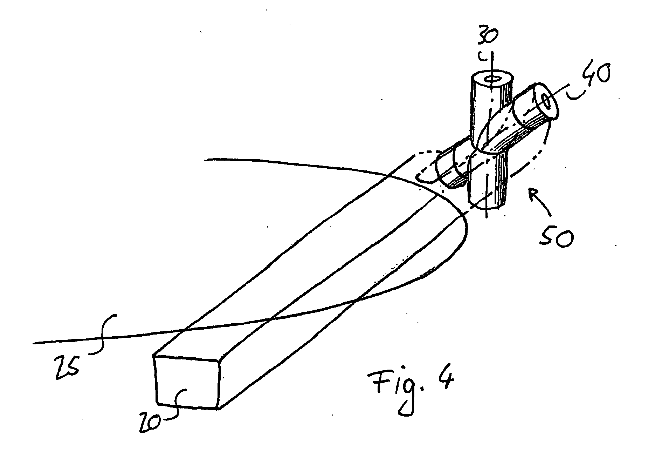

Eine weitere Variante der Erfindung ist in der Figur 4 dargestellt, in der das Ausgleichselement 20 über ein Kardangelenk 50 mit zwei sich kreuzenden Schwenkachsen 30, 40 gelagert ist. Die erste Schwenkachse 30 verläuft im Wesentlichen vertikal, die zweite Schwenkachse 40 kreuzt die erste Schwenkachse 30 in einem schrägen Winkel. Um die erste Achse 30, die vertikal orientiert ist, erfolgt das seitliche Herausschwenken des Ausgleichselementes 20 aus der Einführöffnung 25. Um die zweite Schwenkachse 40 erfolgt das seitliche nach unten Wegschwenken. Durch die Schrägstellung wird eine kombinierte Bewegung des nach unten Schwenkens und es seitlichen Wegschwenkens erreicht. Das Kardangelenk 50 kann einen Anschlag aufweisen, der nur einseitige Bewegungen zulässt, um eine seitliche Schwenkbewegung aus der Einführöffnung 25 heraus am Kardangelenk zu erzwingen. Eine Vorzugsrichtung der Verschwenkbewegung kann über Federvorspannungen eingestellt werden.

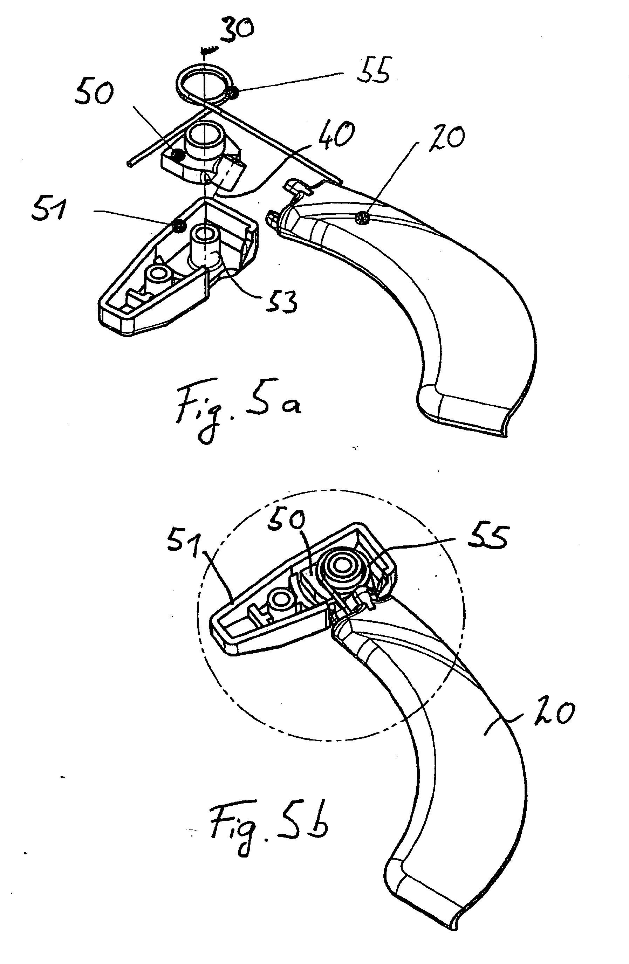

In der Figur 5 sind zwei Darstellungen eines Klemmelementes 20 mit einer kardanischen Lagerung gezeigt. Die Figur 5a zeigt die Einzelteile einer Lagerung mit einem Klemmelement 20, das schwenkbar um eine schräg gestellte Achse 40 gelagert ist. Die Achse 40 ist an einem Kardangelegenk 50 ausgebildet, das eine zweite, im Wesentlichen vertikal orientierte Schwenkachse 30 aufweist. Die Schwenkachsen 30, 40 schneiden sich nicht im Lagerelement und sind im dargestellten Ausführungsbeispiel so ausgebildet, dass die Achsen 30, 40 schiefwinklig zueinander stehen. In einem Lagergehäuse 51, das einen Zapfen 53 zur Aufnahme des Kardangelenks 50 aufweist, ist das Kardangelenk 50 zusammen mit dem Klemmelement 20 schwenkbar gelagert. Eine Rückstellfeder 55 ist vorgesehen, die als Schenkelfeder ausgebildet ist und eine Rückstellbewegung sowohl um die vertikale Schwenkachse 30 als auch um die schräg dazu orientierten zweiten Schwenkachse 40 bereitstellt.

In der Figur 5b ist die kardanische Lagerung 50 zusammen mit dem Klemmelement 20 im montierten Zustand gezeigt. Die Feder 55 ist so ausgebildet und montiert, dass das Klemmelement 20 in der dargestellten Ausgangsposition gehalten wird. Eine Rückstellkraft wird so aufgebaut, dass in der Orientierung der Figur 5b eine Widerstandskraft gegen ein Herausschwenken des Klemmelementes 20 entgegen dem Uhrzeigersinn bereitgestellt wird. Darüber hinaus kann eine Verschwenkung um die zweite Schwenkachse 40 nur gegen einen Federwiderstand erfolgen.

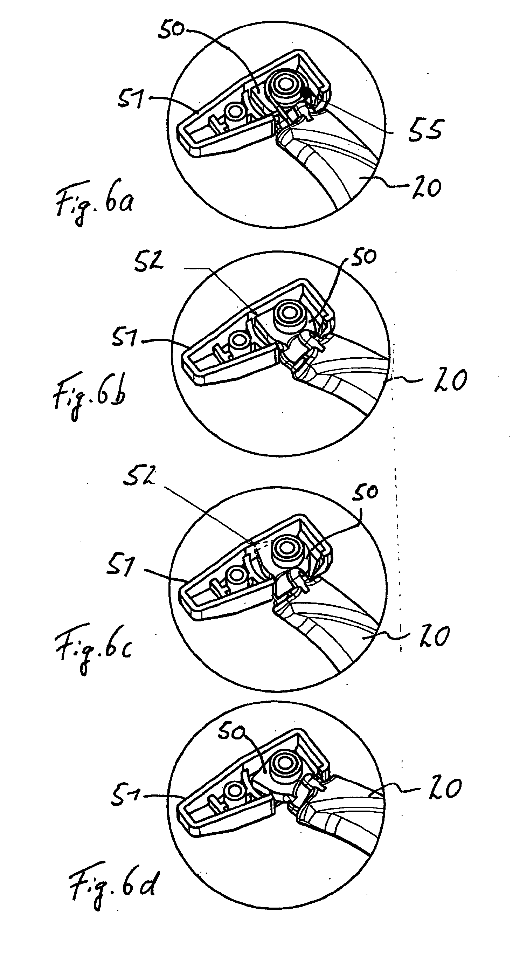

In der Figur 6 sind unterschiedliche Stellungen des Klemmelementes 20 während der unterschiedlichen Phasen des Einführens eines Gegenstandes gezeigt. In der Figur 6a ist der Ausschnitt gemäß Figur 5b gezeigt. Das Klemmelement 20 befindet sich in der Ausgangsstellung und ragt zumindest teilweise in die nicht dargestellte Einführöffnung hinein. Die Feder 55 hält das Klemmelement 20 in der Ausgangsposition. Das Gehäuse 51 kann an dem Rahmen oder einem Karosserieelement befestigt sein.

In der Figur 6b ist die Stellung des Klemmelementes 20 während des Einstellens eines Gegenstandes dargestellt. Das Klemmelement 20 ist schräg nach unten um die Achse 40 herum ausgelenkt, eine Verschwenkung des Kardangelenks um die Schwenkachse 30 in Uhrzeigerrichtung kann nicht erfolgen, da an dem Kardangelenk 50 ein Anschlag 52 ausgebildet ist, der eine solche Drehbewegung verhindert. In der Figur 6c ist in der gestrichelten Linie die Position des Kardangelenks 50 ohne Anschlag 55 gezeigt. Das Kardangelenk 50 und der Anschlag 52 würden ohne eine Bewegungsbegrenzung durch das Gehäuse 51 in Uhrzeigersinn weiter verdreht werden, so dass sich das Klemmelement 20 ausschließlich vertikal nach unten bewegen würde, da sich das Kardangelenk 50 seitlich dazu synchron verdrehen würde.

In der Figur 6d ist die Position gezeigt, die das Klemmelement 20 nach dem Einstellen eines Gegenstandes und dem Zurückschwenken des Klemmelements 20 nach oben einnimmt. Das Kardangelenk 50 ist entgegen dem Uhrzeigersinn um die vertikale Schwenkachse 30 verdreht, die Feder 55, die aus Gründen der Übersichtlichkeit nicht dargestellt ist, bewegt das Klemmelement 20 nach oben in die Ausgangsstellung und drückt es gegen den einzuklemmenden Gegenstand. Das Klemmelement 20 wird durch den nicht dargestellten Gegenstand weit genug nach außen aus der Einführöffnung heraus bewegt, so dass eine freie Bewegung nach oben möglich ist. Das Klemmelement 20 bewegt sich zurück in die klemmende Ausgangsstellung, so dass eine maximale Klemmhöhe gewährleistet ist.

## Patentansprüche

1. Klemmvorrichtung zum Halten von Gegenständen (10) in einer Aufnahme, die eine Grundfläche und eine der Grundfläche gegenüberliegende Einführöffnung (25) aufweist, mit einem schwenkbar gelagerten Ausgleichselement (20), das in Richtung auf den zu haltenden Gegenstand (10) vorgespannt ist und ohne eingeführten Gegenstand (10) in die Einführöffnung (25) hineinragt, wobei das Ausgleichselement (20) um zwei winkelig zueinander orientierte Achsen (30, 40) schwenkbar gelagert ist, **dadurch gekennzeichnet, dass** das Ausgleichselement (20) eine trichterförmige Ausnehmung (22) als Aufnahme für einen Lagerzapfen (32) aufweist.

2. Klemmvorrichtung nach Anspruch 1, **dadurch gekennzeichnet, dass** das Ausgleichselement (20) um beide Achsen (30, 40) federbelastet ist.

3. Klemmvorrichtung nach Anspruch 1 oder 2, **dadurch gekennzeichnet, dass** eine erste Achse (30) vertikal oder horizontal orientiert und eine zweite Achse (40) schräg dazu geneigt angeordnet ist.

4. Klemmvorrichtung nach einem der voranstehenden Ansprüche, **dadurch gekennzeichnet, dass** die Achsen (30, 40) einander nicht schneiden.

5. Klemmvorrichtung nach einem der Ansprüche 1 bis 3, **dadurch gekennzeichnet, dass** das Ausgleichselement (20) an einem Kardangelenk (50) gelagert ist.

6. Klemmvorrichtung nach einem der voranstehenden Ansprüche, **dadurch gekennzeichnet, dass** das Ausgleichselement (20) in einer Kulissenführung (60) gelagert ist.

7. Klemmvorrichtung nach einem der voranstehenden Ansprüche, **dadurch gekennzeichnet, dass** das Ausgleichselement (20) an einem Rahmen (5) gelagert ist, in dem die Einführöffnung (25) ausgebildet ist.

8. Klemmvorrichtung nach Anspruch 7, **dadurch gekennzeichnet, dass** der Rahmen (5) verschieblich oder verschwenkbar gelagert ist.

9. Klemmvorrichtung nach einem der voranstehenden Ansprüche, **dadurch gekennzeichnet, dass** das Ausgleichselement (20) unterhalb der Einführöffnung (25) gelagert ist.

## Claims

1. Clamping apparatus for holding objects (10) in a receptacle, which receptacle has a base face and an introduction opening (25) which lies opposite the base face, having a pivotably mounted compensating element (20) which is prestressed in the direction of the object (10) to be held and protrudes without an introduced object (10) into the introduction opening (25), the compensating element (20) being mounted such that it can be pivoted about two axes (30, 40) which are oriented at an angle with respect to one another, **characterized in that** the compensating element (20) has a funnel-shaped recess (22) as receptacle for a bearing pin (32).

2. Clamping apparatus according to Claim 1, **characterized in that** the compensating element (20) is spring-loaded about both axes (30, 40).

3. Clamping apparatus according to Claim 1 or 2, **characterized in that** a first axis (30) is oriented vertically or horizontally and a second axis (40) is arranged so as to be inclined obliquely with respect thereto.

4. Clamping apparatus according to one of the preceding claims, **characterized in that** the axes (30, 40) do not intersect one another.

5. Clamping apparatus according to one of Claims 1 to 3, **characterized in that** the compensating element (20) is mounted on a cardan joint (50).

6. Clamping apparatus according to one of the preceding claims, **characterized in that** the compensating element (20) is mounted in a slotted guide (60).

7. Clamping apparatus according to one of the preceding claims, **characterized in that** the compensating element (20) is mounted on a frame (5), in which the introduction opening (25) is formed.

8. Clamping apparatus according to Claim 7, **characterized in that** the frame (5) is mounted displaceably or pivotably.

9. Clamping apparatus according to one of the preceding claims, **characterized in that** the compensating element (20) is mounted below the introduction opening (25).

## Revendications

1. Dispositif de serrage pour tenir des objets (10) dans un récepteur, qui comporte une surface de base et une ouverture d'introduction (25) à l'opposé de la surface de base, comprenant un élément de compensation (20) monté en pivotement, qui est précontraint en direction de l'objet (10) à tenir et qui, en l'absence d'objet (10) introduit, pénètre dans l'ouverture d'introduction (25), dans lequel l'élément de compensation (20) est monté en pivotement autour de deux axes (30, 40) orientés sous un angle l'un par rapport à l'autre,
**caractérisé en ce que** l'élément de compensation (20) comporte un évidement en forme d'entonnoir (22) à titre de récepteur pour un tenon de montage (32).

2. Dispositif de serrage selon la revendication 1, **caractérisé en ce que** l'élément de compensation (20) est chargé par un ressort autour des deux axes (30, 40).

3. Dispositif de serrage selon la revendication 1 ou 2, **caractérisé en ce qu'**un premier axe (30) est orienté verticalement ou horizontalement, et un second axe (40) est agencé incliné en oblique par rapport à celui-ci.

4. Dispositif de serrage selon l'une des revendications précédentes, **caractérisé en ce que** les axes (30, 40) ne se recoupent pas mutuellement.

5. Dispositif de serrage selon l'une des revendications 1 à 3, **caractérisé en ce que** l'élément de compensation (20) est monté sur un joint de cardan (50).

6. Dispositif de serrage selon l'une des revendications précédentes, **caractérisé en ce que** l'élément de compensation (20) est monté dans un guidage à glissière (60).

7. Dispositif de serrage selon l'une des revendications précédentes, **caractérisé en ce que** l'élément de compensation (20) est monté sur un cadre (5) dans lequel est ménagée l'ouverture d'introduction (25).

8. Dispositif de serrage selon la revendication 7, **caractérisé en ce que** le cadre (5) est monté avec possibilité de translation ou de rotation.

9. Dispositif de serrage selon l'une des revendications précédentes, **caractérisé en ce que** l'élément de compensation (20) est monté au-dessous de l'ouverture d'introduction (25).
